# FASCICULE DE BREVET EUROPEEN

(11) **EP 0 716 812 B1**
(45) Date de publication et mention de la délivrance du brevet: **30.05.2001**
(21) Numéro de dépôt: 94119932.5
(22) Date de dépôt: 16.12.1994
(51) Int. Cl.: A23L 1/23, A23L 1/229

(54) **Procédé de production d'un agent aromatisant**
Verfahren zur Herstellung eines Gewürzmittels
Process for preparing a flavouring agent

(43) Date de publication de la demande: 19.06.1996
(73) Titulaire: SOCIETE DES PRODUITS NESTLE S.A., 1800 Vevey (CH)
(72) Inventeur: Raetz, Eric, CH-1018 Lausanne (CH); Kochhar, Sunil, 06776 New Milford CT (US); Bengtsson, Bengt, CH-8472 Seuzach (CH); Sihver, Jaak Juri, CH-8605 Gutenswil (CH)
(74) Mandataire: Wavre, Claude-Alain

(56) Documents cités:
- EP-A- 0 039 415
- EP-A- 0 417 481
- EP-A- 0 429 760
- GB-A- 1 013 972
- FOOD TECHNOLOGY, vol. 46,no. 11, Novembre 1992 CHICAGO US, T.NAGODAWITHANA 'Yeast-derived flavors and flavor enhancers and their probable mode of action'
- DATABASE WPI Section Ch, Week 8044 Derwent Publications Ltd., London, GB; Class B04, AN 80-77973C & JP-A-55 120 788 (TOYOBO) , 18 Septembre 1980
- DATABASE WPI Week 86 Derwent Publications Ltd., London, GB; Class 37, AN 86-241842 & JP-A-61 170 363 (CHUGAI BOEKI) , 1 Août 1986
- DATABASE WPI Week 7814 Derwent Publications Ltd., London, GB; AN 78-26149a & JP-A-53 018 773 (AJINOMOTO)

## Description

La présente invention a pour objet un procédé de production d'un agent aromatisant.

Les extraits de levure sont largement utilisés comme agents aromatisants pour des soupes, des produits à base de viande, ou des sauces, par exemple. Parmi les composants aromatiques clefs de ces extraits, on dénombre notamment la guanosine 5'-monophosphate (GMP) et l'inosine 5'-monophosphate (IMP), cette dernière étant un composé non-volatile important utilisé pour renforcer l'arôme de produits à base de viande. L'IMP est dérivée de la déamination oxydative de l'adénosine 5'-monophosphate (AMP). Cette réaction est catalysée par une enzyme appelée déaminase d'adénosine monophosphate qui est trouvée dans de nombreux microorganismes eucaryotiques ou procaryotiques, et notamment dans certaines moisissures du genre *Aspergillus.*

JP 53018773 décrit ainsi la conversion de l'AMP d'un lysat de levure en IMP par une déaminase d'adénosine monophosphate isolé d'un *Aspergillus niger* provenant d'une culture de koji.

JP 55120788 décrit également la présence d'une déaminase d'adénosine monophosphate dans certains microorganismes halophiles, notamment des *Torulopsis* ou *Candida.* Malheureusement, cette déaminase présente une instabilité thermique à partir de 40°C et une activité enzymatique relativement faible, ce qui rend son utilisation industrielle particulièrement difficile.

En outre, on sait que la méthode de préparation d'une sauce de soja traditionnelle présente deux étapes de fermentation faisant intervenir respectivement un *Aspergillus* et un microorganisme halophile. EP 417481 décrit ainsi un procédé de préparation d'une sauce de soja fermentée, dans lequel on prépare un koji par fermentation, avec une culture de koji, d'un mélange de soja cuit et de blé rôti, on hydrolyse le koji en suspension aqueuse durant 3-8 h à 45-60°C avec les enzymes produits durant la fermentation avec la culture de koji, on prépare un moromi en ajoutant du chlorure de sodium à la suspension de koji hydrolysée, on fermente le moromi par un microorganisme halophile, on le presse, on récupére un liquide du moromi pressé ou gâteau, on pasteurise ce liquide et on le clarifie pour ôter les sédiments.

La présente invention a pour but d'utiliser directement un moromi traditionnel, ou une fraction de ce dernier, pour transformer l'AMP d'un lysat de levure en IMP.

A cet effet, dans le procédé de production d'un agent aromatisant selon la présente invention, on mélange un lysat de levure avec du moromi ou une fraction de moromi, et on laisse réagir le mélange à 30-70°C pour convertir l'AMP du lysat en IMP.

En effet, on a constaté avec surprise qu'un moromi présente une activité déaminase intéressante industriellement, même s'il n'est pas fermenté par un microorganisme halophile produisant une déaminase d'adénosine monophosphate, tel que décrit ci-dessus.

De plus, l'activité déaminase d'adénosine monophosphate du moromi provient de celle de la culture de koji, ce qui est relativement surprenant, car la culture de koji est fermentée par des microorganismes halophiles à des hautes concentrations en sels pendant plusieurs semaines, voire plusieurs mois. En effet, il est étonnant que la déaminase de la culture de koji résiste effectivement à de telles conditions de fermentation, car la teneur en sels est tout à fait susceptible de la dénaturer, et la fermentation devrait en fait l'hydrolyser.

Le présent procédé présente en outre l'avantage que la source de déaminase d'adénosine monophosphate utilisée est très économique, puisque le moromi est traditionnellement produit en très grande quantité dans un grand nombre de pays.

Un autre avantage réside dans le fait qu'il n'est pas nécéssaire d'isoler ladite déaminase, mais que l'on peut directement ajouter à un extrait de levure un moromi ou une de ses fractions qui ont une teneur élevée en sels, et malgré cela obtenir quant même un rendement de conversion supérieur à 50%, voire même supérieur à 80%. Il est même possible selon le présent procédé d'obtenir un taux de conversion d'au moins 50% dans un mélange comprenant plus de 50% d'un extrait de levure en poudre, c'est à dire un mélange particulièrement visqueux, voire même pâteux, ce qui est particulièrement étonnant.

Un autre avantage réside dans le fait que le gâteau issu du moromi est généralement jeté. On met donc en valeur un déchet qui cause des problèmes de pollution dûs en particulier à sa teneur élevée en sels.

De plus, les sédiments du liquide extrait du moromi, qui sont traditionnellement réintroduits au début de la fermentation du moromi, peuvent maintenant être utilisés comme matière première dans le procédé d'aromatisation d'un extrait de levure selon la présente invention. Il est également surprenant que l'activité déaminase d'adénosine monophosphate soit très bien conservée dans les sédiments.

Dans le présent exposé, le terme "koji" désigne le produit de la fermentation, avec une culture de koji, d'un mélange d'une source de protéines et d'une source d'hydrates de carbone, notamment d'un mélange d'une légumineuse ou d'une oléagineuse cuite et d'une source de céréale cuite ou rôtie, par exemple d'un mélange de soja ou de haricot cuit et de blé ou de riz cuit ou rôti. Cette culture est de plus issue d'une culture de spores de koji telle que l'on peut s'en procurer dans le commerce, notamment au Japon et en Chine, qui comprend en particulier des spores *d'Aspergillus oryzae* ou *d'Aspergillus soyae.*

De même, le terme "moromi" désigne un mélange d'au moins un koji et d'une saumure, dans le cadre d'une préparation traditionnelle d'une sauce de soja, qui est fermenté pendant plusieurs semaines voir plusieurs mois, par une culture de microorganismes halophiles producteurs de substances aromatiques, telles que certains *Candida versatilis, Torulopsis etchelsii, Saccharomyces rouxii* ou *Pediococcus halophilus*, par exemple. Un moromi peut donc être aussi un mélange fermenté de koji, d'une saumure et d'une matière riche en protéines et/ou en carbohydrates tel que décrit dans EP 429760, par exemple.

Enfin, dans la suite de la description, le terme "déaminase" pourra être utilisé dans le sens déaminase d'adénosine monophosphate. De plus, les pourcentages sont donnés en poids, sauf indication contraire.

Dans le présent procédé selon l'invention, on cherche donc à convertir l'AMP d'un lysat de levure en IMP. Pour cela on peut choisir comme lysat de levure une suspension de levures hydrolysées ou un extrait de levure en poudre préparé traditionnellement à partir de levures du genre *Saccharomyces, Candida, Kluvveromyces*, *Torula* ou *Zymomonas*, par exemple.

Un lysat sous forme d'une suspension de levures hydrolysées peut ainsi présenter une teneur en matière sèche de l'ordre de 5 à 50%, par exemple, et peut être préparé classiquement en mélangeant un extrait de levure en poudre commerciale à de l'eau, ou encore être préparé en hydrolysant une suspension de levures fraîches, c'est à dire vivantes, par plasmolyse et/ou par autolyse, éventuellement renforcée par l'addition de protéases (voir EP 39415, par exemple).

De plus, un lysat sous forme d'un extrait de levure en poudre peut être aussi directement mélangé à un moromi ou une de ses fractions pour convertir l'AMP du lysat en IMP. Une telle poudre de levure peut être obtenue chez un fournisseur d'extraits de levure ou préparée en sèchant sous vide une suspension de levures hydrolysées, par exemple.

Un lysat particulièrement intéressant pour mettre en oeuvre le présent procédé, comprend de préférence au moins 0,5% d'AMP en poids de matière sèche. On peut obtenir un tel lysat directement auprès d'un fournisseur, ou bien l'obtenir en soumettant un lysat, lors de sa préparation ou non, à une digestion par des nucléases, notamment des phosphodiestérases telles que des 5'-ribonucléases, par exemple. Pour ce faire, on peut ainsi ajouter à une suspension de levures un extrait de radicelles de malt connu pour contenir ces enzymes, ou une phosphodiestérase microbienne provenant par exemple de *Pénicillium citrinum*, puis laisser réagir le tout pendant un temps adéquat, à 30-70°C, jusqu'à l'obtention d'une dégradation partielle ou complète de l'ARN en ses monomères, par exemple.

De même, un lysat particulièrement intéressant pour mettre en oeuvre le présent procédé peut comprendre moins de 20% de sels en poids de matière sèche, par exemple, de préférence moins de 10%, voire 5%, ceci pour ne pas inhiber partiellement l'activité des déaminases dans le présent procédé. Un tel lysat peut être ainsi obtenu directement auprès d'un fournisseur, ou bien être obtenu en lavant un extrait de levure en poudre pour en éliminer les sels, puis en le séchant classiquement, par exemple.

Pour mettre en oeuvre le présent procédé, on utilise donc un moromi ou une fraction de moromi pour convertir l'AMP d'un lysat de levure en IMP.

Le moromi peut être obtenu par toutes les méthodes traditionnelles connues de préparation d'une sauce à base de soja, ledit moromi pouvant comprendre cependant plus de 2% en poids de koji sur matière sèche de moromi. Il faut noter qu'il est surprenant que seulement 2% de koji suffise à obtenir une activité déaminase du moromi ou de ses fractions qui soit intéressante pour le présent procédé.

De plus, la fraction de moromi peut être toute partie solide et/ou liquide du moromi pouvant être séparée par des moyens techniques classiques comme un pressage, une filtration et/ou une clarification, par exemple. Ainsi, la fraction du moromi utilisée dans le présent procédé peut être le gâteau issu du moromi, et/ou le liquide issu du moromi, et/ou ce liquide clarifié, et/ou les sédiments de ce liquide, et/ou un extrait aqueux du gâteau, par exemple. Il faut noter que l'on ne cherche pas dans le présent procédé à obtenir une fraction de moromi contenant la déaminase purifiée, mais que l'on utilise que des fractions qui sont classiquement séparées lors d'une fabrication traditionnelle d'une sauce à base de soja telle que décrite ci-dessus, par exemple.

Le gâteau issu du moromi est en fait la partie insoluble du moromi, comprenant des sels et des résidus fermentés d'hydrates de carbone et de protéines. Celui-ci peut être obtenu simplement en pressant le moromi à l'aide d'une presse ou d'un filtre-presse, ou par centrifugation par exemple, pour donner un gâteau comprenant généralement au moins 50% de matière sèche. Ce gâteau peut donc être finalement directement ajouté à un lysat de levure pour en convertir l'AMP en IMP, cependant on préfére broyer le gâteau en petits morceaux avant de l'ajouter au lysat de levure.

Les déaminases d'adénosine monophosphate contenues dans le gâteau peuvent être également extraites de ce dernier, ledit extrait pouvant alors être directement ajouté au lysat de levure. Pour cela, on peut réaliser un extrait aqueux du gâteau, en mélangeant 1 partie du gâteau à 0,5-10 parties d'eau, puis en filtrant le tout. Le filtrat ou extrait peut alors être directement ajouté à un lysat de levure, ou être préalablement concentré par évaporation ou ultrafiltration avant d'y être ajouté, ou encore être séché par lyophilisation puis resuspendu dans de l'eau avant d'y être ajouté, par exemple. Ledit extrait peut donc être aussi conservé sous une forme concentrée ou sèche, avant d'être utilisé pour mettre en oeuvre le présent procédé.

Il est également avantageux d'ajouter préalablement au mélange eau/gâteau une enzyme réduisant sa viscosité, de manière à favoriser l'extraction de la déaminase. On peut ainsi ajouter à ce mélange une préparation enzymatique, notamment un mélange de carbohydrases commercialisé sous la marque Viscozyme® (Novo Nordisk, Danemark), et laisser le tout réagir pendant 1 à 5 h, sous agitation, avant de le filtrer, par exemple.

De même, le liquide issu du moromi, peut être aussi directement ajouté au lysat de levure. Ce liquide contient généralement au moins 30% de matière sèche dont 40-60% sont sous forme de sels, et 2-5% sont susceptibles de sédimenter après plusieurs jours. On préfére ainsi laisser reposer ce liquide durant 1 à 7 jours, de manière à ce que les insolubles non écartés lors du pressage ou de la centrifugation puissent sédimenter, le clarifier en le faisant passer au travers d'un papier filtre, puis l'ajouter directement au lysat de levure.

Enfin, les sédiments du liquide issu du moromi présentent une activité déaminase particulièrement élevée. Ces sédiments, qui sont généralement réintroduits dans le moromi avant fermentation, peuvent donc être maintenant ajoutés directement à un lysat de levure.

Pour mettre en oeuvre le présent procédé, on peut mélanger ainsi 1-30% de gâteau ou de sédiments, 10-50% de moromi, ou 5-50% de liquide issu du moromi à une suspension de levure comprenant 5-50% de matière sèche de levures hydrolysées, par exemple.

De même, on peut mélanger directement 50-90% d'un extrait aqueux de gâteau à un extrait de levure en poudre, par exemple.

Enfin, on peut laisser réagir le mélange lysat/moromi ou lysat/fraction(s) de moromi à 30-70°C pendant 10 min à 6 h, l'inactiver ensuite thermiquement en le chauffant à 80-100°C pendant 10 à 30 min, puis le cas échéant le filtrer s'il contient des résidus solides de sédiments ou de gâteau, par exemple. On obtient ainsi une suspension aromatique de levure tout à fait adaptée à l'assaisonnement de produits à base de viande, notamment des sauces et des soupes, par exemple.

On peut aussi sécher la suspension inactivée d'une manière traditionnelle, par exemple par séchage sous vide ou lyophilisation, et ainsi obtenir une poudre de levure pouvant être aussi utilisée comme agent aromatique pour des produits à base de viande, par exemple.

Le taux de conversion de l'AMP du lysat de levure en IMP obtenu par le présent procédé peut être d'au moins 50%, et le plus souvent d'au moins 80%, par exemple.

Le procédé selon la présente invention est décrit plus en détails dans les exemples présentés à titre d'illustration. Les pourcentages y sont donnés en poids, sauf indication contraire. Ces exemples sont précédés d'une caractérisation de l'activité déaminase d'adénosine monophosphate de quelques fractions du moromi.

### Caractérisation de l'activité déaminase

On prépare un moromi traditionnel fermenté par une levure *Candida versatilis* pendant 15 jours, comme décrit dans l'exemple 1 du brevet EP 429760, à la différence que le moromi comprend 15% en poids de koji sur la matière sèche de moromi. On presse alors le moromi à l'aide d'une presse hydraulique et l'on récolte un gâteau et un liquide.

On prépare alors une série d'extraits enzymatiques à partir du gâteau décrit ci-dessus. Pour cela, on resuspend ce dernier (10% poids/volume) dans plusieurs milieux tamponnés ayant un pH entre 4 et 9, on les mélange pendant 2 h, on les centrifuge à 20000 g pendant 30 min à 4°C, puis on récolte les surnageants.

De même, on prépare une première série d'extraits enzymatiques du liquide décrit ci-dessus, en le diluant de 2 à 20 fois, avec une des solutions tampons ci-dessus ayant un pH de 5.

On teste alors l'activité déaminase d'adénosine monophosphate de chacun de ces extraits en mesurant la libération d'ammoniaque avec le réactif de Nessler, selon la méthode décrite par E. A. Bruns et al. (The analytical chemistry of nitrogen and its compounds, 51, Wiley-Interscience, New York, 1970). D'une manière classique, on incube ainsi à 37°C, pendant 10 min, un mélange comprenant une solution d'AMP 100 mM et l'un des extraits enzymatique du gâteau (400µl/100µl) ou l'un des extraits enzymatique du liquide (480µl/20µl), puis l'on stoppe la réaction en ajoutant 500 µl d'une solution à 0,5 N H2SO4. On ajoute alors au mélange 5 ml d'eau distillée, 1 ml du réactif de Nessler, et l'on mesure ensuite la densité optique à 430 nm. La quantité d'ammoniaque produite est calculée à l'aide d'une courbe étalon établie dans les mêmes conditions, avec des concentrations connues de nitrate d'ammonium.

L'activité optimale de la déaminase se situe autour de pH 5 et 6, et à une température d'environ 60°C. Ces deux valeurs sont identiques à celles présentées par une déaminase d'une culture de koji, alors que celles de déaminases de levures sont manifestement différentes, de l'ordre de pH 7 et 40°C (Yoshino et al., Biochemica et Biophysica Acta, 570, 1979, 157-166; JP 55120788). Ceci suggére donc que l'activité déaminase du moromi a pour origine le koji.

Enfin, la déaminase du gâteau ou du liquide présente une vitesse enzymatique maximale Vmax (exprimée en micromole d'ammoniaque produite par min et par g de préparation d'enzyme) et un Km (exprimé en millimole) très proche de ceux observés pour une déaminase d'une culture de koji traditionnelle. Le tableau 1 ci-après présente les propriétés biochimiques de cette déaminase déterminées par la méthode ci-dessus, en comparaison avec celles de la déaminase de la culture de koji ayant servi à préparer le moromi décrit ci-dessus, et aussi en comparaison avec celles d'une déaminase de levure.

**Tableau 1**

| Source de la déaminase d'adénosine monophosphate | pH optimum | Température optimale (°C) | Km (mM) | Vmax (µmol/min/g) |
|---|---|---|---|---|
| Koji | 5-6 | 60 | 1,47 | 7,94 |
| Liquide pressé du moromi | 5-6 | 60 | 1,58 | 0,69 |
| Gâteau du moromi | 5-6 | 60 | 1,72 | 1,02 |
| Levure (Yoshino, 1979) | 6,5-7,5 | 40 | 0,02 | 350-500 |

Tous ces résultats indiquent donc clairement que l'activité déaminase du moromi et de ses fractions a pour origine le koji, ce qui est surprenant, car en effet la fermentation du moromi n'a pas détruit cette activité.

### Exemples 1 à 8

On prépare un moromi traditionnel fermenté par une levure *Candida versatilis* pendant 15 jours, comme décrit à l'exemple 1 du brevet EP 429760, à la différence que le moromi comprend 15% en poids de koji sur la matière sèche du moromi, et 35% de matière sèche dont 42% est sous forme de sels.

Une partie de ce moromi est ensuite pressé par un filtre-presse hydraulique traditionnel. On obtient ainsi un gâteau comprenant 65% de matière sèche dont 12% sont sous forme de sels, et un liquide comprenant 30% de matières sèche dont 50% sont sous forme de sels et 3% est susceptible de sédimenter.

Une partie du liquide est ensuite laissé reposer 3 jours, puis est clarifié au travers d'un filtre. On obtient ainsi un liquide clarifié comprenant 29% de matière sèche, et des sédiments sur le filtre comprenant 50% de matière sèche.

Ensuite, on prépare plusieurs mélanges comprenant une quantité de levure en poudre commerciale contenant 2% d'AMP en poids de matière sèche et environ 20% de sels en poids de matière sèche (Biospringer EXL2003, France), une autre quantité d'eau, et encore une autre quantité de moromi, ou de gâteau, ou de liquide pressé, ou de liquide clarifié ou de sédiments, selon les essais. Pour ce faire, on mélange premièrement l'extrait de levure en poudre avec l'eau, on lui ajoute le moromi ou l'une de ses fractions, puis on laisse réagir le tout, sous agitation, pendant un temps et à une température suffisantes pour observer une conversion de l'AMP de l'extrait en IMP. Ensuite, après déamination, on inactive les déaminases en chauffant chaque mélange à 95°C pendant 20 min, puis on les filtre le cas échéant s'ils comprennent des résidus de gâteau ou de sédiments.

Finalement, on sèche sous vide d'une manière traditionnelle chaque mélange inactivé, voire le cas échéant filtré, puis on en mesure la teneur en AMP et IMP par la méthode chromatographique suivante.

L'analyse des nucléotides est effectuée au moyen d'un système de chromatographie à haute performance du type Waters HPLC (Millipore, Suisse) équipé d'un auto-injecteur WISP 710B, de deux pompes Waters 510 et d'un contrôleur de gradient automatique Waters 680. La séparation des nucléotides s'effectue à température ambiante, sur des colonnes de type Vydac RP C18 (P. Bucher, Suisse). La phase mobile est constituée de deux éluants: une solution à 20 mM de triéthylamine (solvant A) et une solution contenant 20mM de triéthylamine et 50% (v/v) d'acétonitrile (solvant B).

Les échantillons à analyser, ainsi que les éluants sont préfiltrés sur une membrane Nylaflo (Gelman; U.S.) de 0,22µm de porosité. La chromatographie s'effectue à une vitesse de 1 ml/min par une première phase d'élution d'une durée de 10 min avec 100% de solvants A, puis une deuxième phase de 40 min où la proportion en solvant B s'élève à 15%, et enfin une troisième phase de 10 min avec 100% de solvant B. La mesure de la teneur en nucléotides se fait par un spectrophotomètre d'absorption à 254nm. La quantification des pics d'absorption fait appel à des solutions de référence contenant des quantités connues de nucléotides. L'identité des pics est confirmée par coélution de nucléotides de référence avec des échantillons à mesurer (technique dite de "spiking") et par contrôle des spectres d'absorption correspondant aux différents pics obtenus, à l'aide d'un spectrophotomètre de type HP8452A ( Hewlett-Packard).

Les résultats et les conditions de déamination pour chaque exemple sont illustrés dans le tableau 2 ci-après. L'extrait de levure en poudre contient initialement 97% de matière sèche, 2% d'AMP et 0% d'IMP.

**Tableau 2**

| Exemple | Extrait de levure (%) | Moromi ou fraction de moromi (%) | Eau (%) | Conditions de déamination | Nucléotides dans l'extrait de levure en poudre final (%) |
|---|---|---|---|---|---|
| 1 | 20 | Moromi: 35 | 45 | 52°C; 3h | AMP 0,16; IMP 1,60 |
| 2 | 20 | Gâteau: 1 | 79 | 54°C; 4h | AMP 0,30; IMP 1,71 |
| 3 | 20 | Gâteau: 10 | 70 | 54°C; 4h | AMP 0,01; IMP 1,80 |
| 4 | 20 | Liquide pressé: 20 | 60 | 50°C; 4h | AMP 0,19; IMP 1,23 |
| 5 | 20 | Liquide pressé: 30 | 50 | 50°C; 4h | AMP 0,2; IMP 1,30 |
| 6 | 20 | Liquide clarifié: 30 | 55 | 50°C; 4h | AMP 0,3; IMP 1,20 |
| 7 | 20 | Sédiments: 1 | 79 | 54°C; 4h | AMP 0,15; IMP 1,7 |
| 8 | 20 | Sédiments: 10 | 70 | 54°C; 4h | AMP 0,1; IMP 1,83 |

### Exemples 9 à 11

Dans ces exemples, on utilise le même moromi et les mêmes fractions de moromi, que ceux décrits dans les exemples 1 à 8. Par contre, on utilise un extrait de levure en poudre commercial comprenant moins de 3% de sels (Biospringer, EXL2000 sans sels, France).

On réalise alors la conversion de l'AMP du lysat en IMP selon le procédé de la présente invention. Pour ce faire, on ajoute à un mélange eau/extrait de levure en poudre, une quantité de liquide pressé, ou de liquide clarifié ou de sédiments, selon les exemples. Puis l'on traite chaque mélange comme cela est décrit dans les exemples 1 à 8.

Le tableau 3 ci-après illustre les résultats et les conditions de déamination pour chaque exemple. L'extrait de levure en poudre initial comprend 1% d'AMP et 0% d'IMP.

**Tableau 3**

| Exemple | Extrait de levure (%) | Moromi ou fraction de moromi (%) | Eau (%) | Conditions de déamination | Nucléotides dans l'extrait de levure en poudre final (%) |
|---|---|---|---|---|---|
| 9 | 40 | Liquide pressé: 40 | 20 | 50°C; 4h | AMP 0,14; IMP 0,58 |
| 10 | 20 | Liquide clarifié: 40 | 40 | 50°C; 4h | AMP 0,01; IMP 0,52 |
| 11 | 40 | Sédiments: 5 | 55 | 50°C; 4h | AMP 0,33; IMP 0,37 |

Comme on peut le voir dans le tableau ci-dessus, un extrait de levure sans sels permet d'augmenter, dans le présent procédé, les proportions respectives de la poudre de levure et de la fraction de moromi, sans pour autant perturber le taux de conversion de l'AMP en IMP.

### Exemples 12 à 14

Dans les exemples 12 et 13, on extrait les déaminases contenues dans le gâteau décrit aux exemples 2 et 3. Pour cela, on mélange 1 partie de gateau à 5 parties d'eau à 50°C. Dans le cas de l'exemple 13, on ajoute au mélange eau/gâteau 0,1% de Viscosyme® , on le remue à 50°C pendant 2 h, puis on le filtre de manière à ôter les résidus insolubles. Le filtrat des deux exemples 12 et 13 est alors ajouté au même lysat de levure que celui décrit aux exemples 1 à 8, puis chaque mélange est ensuite traité comme décrit dans ces exemples.

Dans l'exemple 14, on concentre le filtrat de l'exemple 13 par évaporation sous vide jusqu'à l'élimination de 80% de l'eau. Puis, pour réaliser la conversion de l'AMP en IMP selon l'invention, on dilue l'extrait concentré à raison de 26,6 parties dans 23,4 parties d'eau, on le mélange à l'extrait de levure décrit aux exemples 9 à 11 dans les conditions décrites dans le tableau ci-après, on chauffe ensuite le mélange à 95°C pendant 20 min, puis on le sèche sous vide jusqu'à obtenir une poudre de levure dans laquelle on détermine la teneur en nucléotides.

Le tableau 4 ci-après illustre les résultats et les conditions de déamination pour chaque exemple.

**Tableau 4**

| Exemple | Extrait de levure (%) | Extrait aqueux du gâteau (%) | Conditions de déamination | Nucléotides dans l'extrait de levure en poudre final (%) |
|---|---|---|---|---|
| 12 | 20 | Sans Viscosyme® 80 | 54°C; 4h | AMP 0,07 ; IMP 1,80 |
| 13 | 20 | Avec Viscosyme® 80 | 54°C; 4h | AMP 0,1 ; IMP 1,86 |
| 14 | 50 | Extrait concentré 50 | 54°C; 4h | AMP 0,53 ; IMP 0,9 |

## Revendications

1. Procédé de production d'un agent aromatisant, dans lequel on mélange un lysat de levure avec du moromi ou une fraction de moromi, et on laisse réagir le mélange à 30-70°C pour convertir l'AMP du lysat en IMP.

2. Procédé selon la revendication 1, dans lequel le lysat est une suspension de levures hydrolysées ou un extrait de levure en poudre.

3. Procédé selon la revendication 1, dans lequel le lysat de levures comprend au moins 0,5% d'AMP en poids de matière sèche.

4. Procédé selon la revendication 1, dans lequel le lysat de levures comprend moins de 10% de sels en poids de matière sèche.

5. Procédé selon la revendication 1, dans lequel la fraction du moromi est comprise, seule ou en combinaison, dans le groupe formé par le gâteau issu du moromi, le liquide issu du moromi, ce liquide clarifié, les sédiments de ce liquide et un extrait aqueux du gâteau.

6. Procédé selon la revendication 5, dans lequel, pour préparer l'extrait aqueux, on mélange 0,5-10 parties d'eau à 1 partie de gâteau, on réduit le cas échéant la viscosité du mélange eau/gâteau par des carbohydrases, on le filtre et on récolte un filtrat.

7. Procédé selon la revendication 5, dans lequel on mélange 1-30% de gâteau ou de sédiments, 10-50% de moromi, ou 5-50% de liquide issu du moromi à une suspension comprenant 5-50% de levures hydrolysées en poids de matière sèche.

8. Procédé selon la revendication 5, dans lequel on mélange 50-90% d'un extrait aqueux de gâteau ou de sédiments à un extrait de levure en poudre.

9. Procédé selon la revendication 1, dans lequel on laisse réagir le mélange pendant 10 min à 6 h, puis on l'inactive thermiquement.

10. Procédé selon la revendication 9, dans lequel on sèche le mélange inactivé.

## Patentansprüche

1. Verfahren zur Herstellung eines Aromamittels, bei dem man ein Hefelysat mit einer Moromi-Maische oder einer Fraktion einer Moromi-Maische mischt und die Mischung bei 30-70°C reagieren läßt, um das AMP des Lysats in IMP umzuwandeln.

2. Verfahren nach Anspruch 1, bei dem das Lysat eine Suspension von hydrolysierten Hefen oder ein pulverförmiger Hefeextrakt ist.

3. Verfahren nach Anspruch 1, bei dem das Hefelysat mindestens 0,5 % AMP, bezogen auf das Gewicht der Trockenmasse, enthält.

4. Verfahren nach Anspruch 1, bei dem das Hefelysat mindestens 10 % Salze, bezogen auf das Gewicht der Trockenmasse, enthält.

5. Verfahren nach Anspruch 1, bei dem die Moromifraktion allein oder in Kombination in der Gruppe enthalten ist, die gebildet wird von dem aus der Moromi-Maische stammenden Kuchen, der Flüssigkeit der Moromi-Maische, dieser Flüssigkeit in geklärtem Zustand, den Sedimenten dieser Flüssigkeit und einem wässrigen Extrakt des Kuchens.

6. Verfahren nach Anspruch 5, bei dem man zur Herstellung des wässrigen Extrakts 0,5-10 Teile Wasser mit 1 Teil Kuchen mischt, ggf. die Viskosität der Mischung Wasser/Kuchen durch Carbohydrasen verringert, die Mischung filtert und ein Filtrat gewinnt.

7. Verfahren nach Anspruch 5, bei dem man 1-30 % Kuchen oder Sedimente, 10-50 % Moromi-Maische oder 5-50 % Flüssigkeit der Moromi-Maische mit einer Suspension mischt, die 5-50 % hydrolysierte Hefen enthält, bezogen auf das Gewicht der Trockenmasse.

8. Verfahren nach Anspruch 5, bei dem man 50-90 % eines wässrigen Kuchen- oder Sedimenteextrakts mit einem pulverförmigen Hefeextrakt mischt.

9. Verfahren nach Anspruch 1, bei dem man die Mischung 10 min bis 6 h reagieren lässt und sie dann thermisch inaktiviert.

10. Verfahren nach Anspruch 9, bei dem man die inaktivierte Mischung trocknet.

## Claims

1. Method for producing a flavouring agent, wherein a yeast lysate is mixed with moromi or a moromi fraction and the mixture is left to react at 30-70°C so as to convert the AMP of the lysate into IMP.

2. Method according to claim 1, wherein the lysate is a suspension of hydrolysed yeasts or a powdered yeast extract.

3. Method according to claim 1, wherein the yeast lysate includes at least 0.5 % AMP by weight of dry matter.

4. Method according to claim 1, wherein the yeast lysate includes less than 10 % salts by weight of dry matter.

5. Method according to claim 1, wherein the moromi fraction is comprised, alone or in combination, of the group formed by the cake derived from moromi, the liquid derived from moromi, this liquid clarified, sediments from this liquid and an aqueous extract from the cake.

6. Method according to claim 5 wherein, in order to prepare the aqueous extract, 0.5-10 parts of water are mixed with 1 part of cake, the viscosity of the water/cake mixture is reduced as required by carbohydrases, the mixture is filtered and a filtrate is collected.

7. Method according to claim 5, wherein 1-30 % of cake or sediments, 10-50 % moromi, 5-50 % of liquid derived from moromi are mixed with a suspension comprising 5-50 % hydrolysed yeasts by weight of dry matter.

8. Method according to claim 5, wherein 50-90 % of an aqueous extract of cake or sediments is mixed with a powdered yeast extract.

9. Method according to claim 1, wherein the mixture is left to react for 10 min to 6 h, and is then thermally inactivated.

10. Method according to claim 9, wherein the inactivated mixture is dried.
